Europäisches Patentamt

European Patent Office

Office européen des brevets

(11) Veröffentlichungsnummer: **0 498 937 A1**

# (12) EUROPÄISCHE PATENTANMELDUNG

(21) Anmeldenummer: **91119415.7**

(51) Int. Cl.5: **C03B 5/235**

(22) Anmeldetag: **14.11.91**

(30) Priorität: **01.02.91 DE 4103051**

(43) Veröffentlichungstag der Anmeldung:
**19.08.92 Patentblatt 92/34**

(84) Benannte Vertragsstaaten:
**BE DE FR GB IT NL**

(71) Anmelder: **KÖRTING HANNOVER AG**
**Badenstedter Strasse 56**
**W-3000 Hannover 91(DE)**

(72) Erfinder: **Sieger, Werner**
**Gevekerkamp 45**
**W-3000 Hannover 91(DE)**
Erfinder: **Hinze, Wolfram**
**Herthastrasse 12**
**W-3000 Hannover 71(DE)**

(74) Vertreter: **Leine, Sigurd, Dipl.-Ing. et al**
**LEINE & KÖNIG Patentanwälte**
**Burckhardtstrasse 1**
**W-3000 Hannover 1(DE)**

(54) **Glasschmelzofen mit mindestens einer Stromabwärts von der Düse angeordneten Öffnung zur Zuführung von Sauerstoff.**

(57) Glasschmelzofen, mit einer Brennkammer, mit mindestens einer Düse zur Zuführung von Brennstoff in die Brennkammer, mit mindestens einem davon getrennten Kanal (20,14) zur Zuführung von Luft in die Brennkammer und mit mindestens einer stromabwärts von der Düse angeordneten Öffnung (27-29,35-37), die an eine Speisequelle (21) für im wesentlichen reinen Sauerstoff angeschlossen ist (22-26,30-34), um so eine Stufenverbrennung zu bewirken. Bei Zuführung reinen Sauerstoffs ist eine geringere Menge erforderlich als bei Zuführung von Luft. Obwohl der reine Sauerstoff kalt zugeführt werden kann, bewirkt er keine merkliche Abkühlung in der Brennkammer im Zuführungsbereich. Es sind keine Gasstrahlpumpen und heiße und zu isolierende Luftleitungen großen Querschnitts erforderlich. Der Betrieb ist verbilligt.

FIG.2

EP 0 498 937 A1

Die Erfindung betrifft einen Glasschmelzofen der im Oberbegriff des Anspruchs 1 genannten Art.

Durch EP 306 657 B1 ist ein Glasschmelzofen der betreffenden Art bekannt, bei dem stromabwärts von der Düse in der Brennkammer wenigstens eine Öffnung zur Zuführung eines Teils der zur Verbrennung des Brennstoffes notwendigen Luft vorgesehen ist. Es erfolgt eine Stufenverbrennung durch Zuführung von Verbrennungsluft entlang der Flamme, so daß sich durch die Lage der Zuführungsstellen und der zugeführten Luftmengen die Stufenverbrennung entlang der Flamme kontrollieren läßt. Dabei gilt natürlich die bei einer Stufenverbrennung bekannte Voraussetzung eines nah- oder unterstöchiometrischen Betriebs der Feuerung. Die Stickoxidbildung läßt sich geringhalten, da die Zuführung von Luft zum Brenngas zur Beeinflußung von Flammbild und Flammlänge nicht erforderlich ist, was eine erhöhte Temperatur im Wurzelbereich der Flamme und damit eine erhöhte Stickoxidbildung zur Folge haben wurde. Um trotz geringer Querschnitte der Öffnungen für die stufenweise Zuführung von Luft die Zuführung der nötigen Menge von Luft sicherstellen, sind bei diesem bekannten Glasschmelzofen die Öffnungen an den Ausgang einer Strahlpumpe angeschlossen, deren Saugseite mit einem Kanal zur Zuführung von Brennluft von einer Regenerativkammer her verbunden und deren Treibseite an eine Preßluftquelle zur Zuführung kalter Preßluft angeschlossen ist. Somit wird aus der Regenerativkammer des Glasofens heiße Luft angesaugt und der stromabwärts liegenden Öffnung zugeführt, und zwar in einer solchen Menge, daß die wegen der unterstöchiometrischen Verbrennung im Bereich der Düse gebildeten CO-Anteile verbrannt werden.

Dieser bekannte Glasschmelzofen hat sich grundsätzlich bewährt, jedoch haften ihm mehrere Nachteile an. Ein Nachteil besteht darin, daß die Strahlpumpe Preßluft benötigt, zu deren Erzeugung ein energieverbrauchender Kompressor erforderlich ist. Ein weiterer Nachteil besteht darin, daß durch die naturgemäß kalt erzeugte Preßluft die heiß zugeführte Verbrennungsluft bei der Vermischung etwas abgekühlt wird, so daß sich eine niedere Mischtemperatur und damit eine leichte Energieanhebung des Glasschmelzofens ergibt. Schließlich besteht ein Nachteil darin, daß die Strahlpumpen und Heißluftleitungen, die außerhalb des Ofens angebracht sind, mit hohen Temperaturen arbeiten und daher isoliert bzw. gekühlt werden müssen.

Diese Nachteile sollen durch die Erfindung vermieden werden. Der zu schaffende Glasschmelzofen soll einen gesonderten Luftkompressor überflüssig machen, eine Absenkung der der stromabwärts angeordneten Öffnung zugeführten Sauerstoffanteile durch Vermischung vermeiden und außerdem Strahlpumpen und Heißluftleitungen mit Isolation überflüssig machen.

Die der Erfindung zugrundeliegende Aufgabe wird wird durch die im Kennzeichen des Anspruchs 1 angegebene Lehre gelöst.

Der Grundgedanke dieser Lehre besteht darin, diesen für die Stufenverbrennung erforderlichen Sauerstoff nicht in Form von Luft, sondern als reinen Sauerstoff zuzuführen. Die Öffnung ist daher an eine Speisequelle für im wesentlichen reinen Sauerstoff angeschlossen. Die zuzuführende Gasmenge ist daher gegenüber der Gasmenge bei Zuführung des für die Stufenverbrennung erforderlichen Sauerstoffs durch Luft wesentlich verringert. Der Aufwand für die Zuführung solchen Sauerstoffs ist verhältnismäßig gering, er braucht nur einen geringen Zuführungsdruck zu haben. Daher ist kein aufwendiger Kompressor wie der zur Erzeugung der Treibluft für eine Strahlpumpe erforderlich. Die Leitungen zur Zuführung des reinen Sauerstoffs und die zugehörigen Armaturen benötigen einen vergleichsweise geringen Querschnitt. Eine Wärmeisolation ist dabei nicht erforderlich. Reiner Sauerstoff steht in Glashütten in der Regel in ausreichender Menge ohnehin zur Verfügung, so daß bei einer bestehenden Glashütte keine wesentlichen zusätzlichen Investitionskosten anfallen. Entscheidend ist, daß die Gesamtkosten des erfindungsgemäßen Glasschmelzofens gegenüber dem bekannten Glasschmelzofen verringert sind.

Wie bei dem bekannten, oben genannten Glasschmelzofen können in Strömungsrichtung hintereinander mehrere Öffnungen zur Zuführung von im wesentlichen reinen Sauerstoff gemäß der Erfindung angeordnet sein. Zweckmäßig ist es ebenso, daß die Öffnung bzw.Öffnungen in der Brennkammer dicht oberhalb des Glasbades angeordnet sind.

Anhand der Zeichnung soll die Erfindung näher erläutert werden.

Fig. 1    zeigt ein Ausführungsbeispiel eines Glasschmelzofens gemäß der Erfindung in einem Vertikalschnitt und

Fig. 2    ist ein Horizontalschnitt II-II durch Fig. 1.

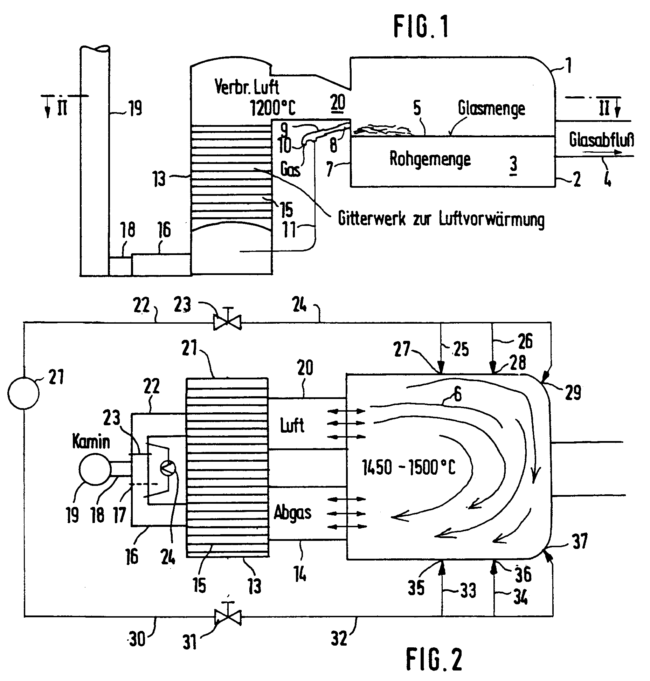

Die Fig. 1 und 2 zeigen einen Ofen 1, dessen unterer Teil eine Glasschmelzwanne 2 bildet, in der sich ein Rohgemenge 3 aus Glas befindet, das durch einen Abflußkanal 4 abfließen kann. Auf dem Rohgemenge befindet sich Glasgemenge 5, über das dicht eine langgestreckte Flamme hinwegstreicht, die durch Pfeile 6 in Fig. 2 angedeutet ist.

Zur Flammbildung befindet sich in einer Wand 7 des Ofens 1 eine Öffnung, in die dicht eine Düse 8 einer Strahlpumpe 9 eingesetzt ist, die über eine Gasdruckleitung 10 Brenngas erhält und über eine Saugleitung 11 Abgas aus einer Kammer 13, die durch einen Kanal 14 mit dem oberen Bereich des Ofens 1 verbunden ist.

Das Abgas aus dem Ofen 1 gelangt über den Kanal 14 in den oberen Bereich der Kammer 13 und strömt dort nach unten durch ein Gitterwerk 15 und gelangt über eine Abgasleitung 16, einen Schieber 17 und einen Zug 18 in einen Kamin 19. In der dargestellten Lage ist der Schieber 17, angedeutet durch eine gestrichelte Linie, geöffnet.

Seitlich neben dem Kanal 14 befindet sich ein weiterer Kanal 20 zur Verbindung des oberen Teiles des Ofens 1 mit einer weiteren Kammer 21, die in gleicher Weise wie die Kammer 13 im unteren Bereich durch eine Abgasleitung 22 und einen Schieber 23 mit dem Zug 18 und dem Kamin 19 verbunden ist. In der angezeigten Lage ist der Schieber 23, angedeutet durch eine ausgezogene Linie, geschlossen. Durch eine nicht im einzelnen dargestellte Einrichtung 24 sind die Abgasleitungen 16 bzw. 2 mit der Atmosphäre verbindbar, wenn der jeweils zugehörige Schieber 23 bzw. 17 geschlossen ist.

In der Darstellung der Fig. 1 und 2 ist der Schieber 23 geschlossen, so daß die Abgasleitung 16 mit der Atmosphäre verbunden ist und so Luft unten in die Kammer 21 eintritt, sich dort durch das heiße Gitterwerk 15 erwärmt und schließlich durch den Kanal 20 in den oberen Teil des Ofens 1 eintritt und die wesentliche Verbrennungsluft für das aus der Düse 8 eintretende Brenngas bildet. Ist in der dargestellten Arbeitslage das Gitterwerk 15 in der Kammer 13 erhitzt, so wird die Arbeitsweise umgekehrt. Das bedeutet, daß jetzt der Schieber 23 geöffnet, die Verbindung der Abgasleitung 22 mit der Atmosphäre durch die Einrichtung 24 unterbrochen und eine Verbindung zwischen der Atmosphäre und der Abgasleitung 16 hergestellt sowie der Schieber 17 geschlossen wird. Gleichzeitig wird die Düse 8 abgeschaltet, während eine weitere, in der Zeichnung nicht dargestellte Düse in dem Kanal 14 in Betrieb gesetzt wird, so daß der Kanal 14 als Luftleitung zur Zuleitung von Brennluft dient, die zuvor in dem Gitterwerk 15 erwärmt worden ist. Die Flamme verläuft dann in umgekehrter Richtung zur Richtung der Pfeile 6 in Fig. 2.

Eine Speisequelle 21 für reinen Sauerstoff ist über eine Leitung 22 und ein Ventil 23 sowie eine Leitung 24 und Abzweigleitungen 5 und 26 mit Öffnungen 27, 28 und 29 verbunden, die sich in dem Ofen 1 dicht oberhalb des Glasgemenges 5 befinden und besonders deutlich in Fig. 1 erkennbar sind, während sie in Fig. 2 lediglich schematisch durch Pfeile angedeutet sind.

Da es sich bei dem dargestellten Ausführungsbeispiel um einen Umkehrofen handelt, ist natürlich die Speisequelle 21 über eine weitere Leitung 30, ein Ventil 31, eine Leitung 32 und Abzweigleitungen 33 und 34 mit Öffnungen 35, 36 und 37 verbunden, die den Öffnungen 27-29 entsprechen.

Bei Betrieb gelangt in der dargestellten Arbeitslage, in der Luft von der Kammer 21 her die Brennluft bildet, reiner Sauerstoff von der Speisequelle 21 über Leitung 22, das jetzt geöffnete Ventil 23 und Leitung 24 sowie über Abzweigleitungen 25 und 26 zu den Öffnungen 27-29. Der durch die Pfeile 6 angedeuteten Flamme wird daher stufenweise nacheinander zusätzlicher reiner Sauerstoff zur Verbrennung zugeführt. Der Sauerstoff wird dabei dicht oberhalb des Glasgemenges 5 eingeleitet, so daß er zwischen diesem und der eigentlichen Flamme geschichtet ist. Somit kann trotz stickstoffarmer Verbrennung die Bildung von Reduktionszonen oberhalb des Glasspiegels vermieden werden, so daß auch die Läuterung des Glasbades gut ist.

Ist die Arbeitsweise des Glasschmelzofens umgekehrt, so wird das Ventil 23 geschlossen und das Ventil 31 geöffnet, so daß auch die Zuführung reinen Sauerstoffs in umgekehrter Weise erfolgt. Es ist allerdings auch möglich, die Zuführung des reinen Sauerstoffs jeweils gegensinnig durchzuführen.

**Patentansprüche**

1. Glasschmelzofen, mit einer Brennkammer, mit einer Düse zur Zuführung von Brennstoff in die Brennkammer, mit einem davon getrennten Kanal zur Zuführung von Luft in die Brennkammer und mit einer stromabwärts von der Düse angeordneten Öffnung zur Zuführung eines Teils des zur Verbrennung des Brennstoffes notwendigen Sauerstoffs, **dadurch gekennzeichnet**, daß die Öffnung (27-29, 35-37) an eine Speisequelle (21) für im wesentlichen reinen Sauerstoff angeschlossen ist.

2. Glasschmelzofen nach Anspruch 1, **dadurch gekennzeichnet**, daß in Strömungsrichtung hintereinander mehrere Öffnungen (27-29, 35-37) zur Zuführung von im wesentlichen reinem Sauerstoff vorgesehen sind.

3. Glasschmelzofen nach Anspruch 1 oder 2, **dadurch gekennzeichnet**, daß die Öffnung bzw. Öffnungen (27-29, 35-37) in der Brennkammer dicht oberhalb des Glasbades (5) angeordnet sind.

# FIG.1

Verbr. Luft
1200°C

**20**

5    Glasmenge

II↓

9
10    8
Gas    7

Rohgemenge    **3**

Glasabfluß

13

15
11

Gitterwerk zur Luftvorwärmung

19

18    16

1

2    4

# FIG.2

22    23    24

21    20

27    25    26    28
29

21

22

23
Kamin

19  18  17

16    24

15    13    14

Luft

Abgas

**6**

1450 - 1500°C

37

35    33    36
34

30    31    32

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X<br>P,Y | EP-A-0 440 085 (AIR PRODUCTS & CHEMICALS INC.)<br>* Ansprüche 1,10-14; Abbildungen 1-3; Spalte 4, Zeile 45 - Spalte 5, Zeile 22; Spalte 6, Zeilen 18-30; Spalte 7, Zeilen 21-45 *<br>--- | 1<br>2,3 | C03B5/235 |
| D,Y | EP-A-0 306 657 (KÖRTING HANNOVER AG)<br>* das ganze Dokument *<br>--- | 1-3 | |
| Y | GLASS,<br>Bd. 59, Nr. 5, Mai 1982, REDHILL (SURREY) GB<br>P.I.BOOKER: 'Developments in the use of oxygen in glass furnace combustion systems'<br>Seiten 172,175,177-178<br>--- | 1-3 | |
| D,A | AMERICAN CERAMIC SOCIETY BULLETIN.<br>Bd. 69, Nr. 11, 1990, COLUMBUS US<br>Seiten 1827 - 1830;<br>J.TANG ET AL.: 'Application of Pure Oxygen with Batch Preheating to Glass-Melting Furnaces'<br>--- | | |
| A | GLASTEKNISK TIDSKRIFT.<br>Bd. 43, Nr. 1, 1988, VAXJO SE<br>Seiten 3 - 4;<br>G.JANNETTA: 'The Use of Oxygen in Glass Furnaces'<br>----- | 1 | **RECHERCHIERTE SACHGEBIETE (Int. Cl.5)**<br><br>C03B |

Der vorliegende Recherchenbericht wurde für alle Patentansprüche erstellt

| Recherchenort | Abschlußdatum der Recherche | Prüfer |
|---|---|---|
| DEN HAAG | 13 MAI 1992 | STROUD J.G. |

EPO FORM 1503 03.82 (P0403)